# EUROPÄISCHE PATENTSCHRIFT

(11) **EP 1 733 980 B1**
(45) Veröffentlichungstag und Bekanntmachung des Hinweises auf die Patenterteilung: **29.10.2008**
(21) Anmeldenummer: 06110381.8
(22) Anmeldetag: 24.02.2006
(51) Int. Cl.: B65G 1/04, B65H 19/12, B65H 19/30, B65G 47/52

(54) **Vorrichtung zum Transport von mindestens einer Materialrolle**
Device for transporting of at least a roll of material
Dispositif de transport d'au moins une bobine de matériau

(30) Priorität: 15.06.2005 DE 102005027544
(43) Veröffentlichungstag der Anmeldung: 20.12.2006
(73) Patentinhaber: Koenig & Bauer Aktiengesellschaft, 97080 Würzburg (DE)
(72) Erfinder: Bierbaum, Günter, 74722, Buchen (DE); Lehrieder, Erwin, 97253, Gaukönigshofen (DE)

(56) Entgegenhaltungen:
- JP-A- 57 189 919
- JP-A- 61 045 806
- US-A- 5 857 391
- US-A1- 2003 133 781
- US-A1- 2003 185 656
- US-B1- 6 464 064

## Beschreibung

Die Erfindung betrifft eine Vorrichtung zum Transport von mindestens einer Materialrolle gemäß den Merkmalen des Oberbegriffs des Anspruchs 1.

In ihrem Produktlaufzyklus werden Materialrollen, bevor sie dem Druckprozess zugeführt werden, zahlreiche Male transportiert und dabei zwischen verschiedenen Fördersystemen umgeladen. Beispielsweise wird, wie in der EP 0 390 735 A2 beschrieben, eine Rolle aus einem Rollenhauptlager in ein Rollenzwischenlager transportiert, dort wird sie von einem zweiten Transportsystem mit Zugriff auf die Plätze eines Rollenzwischenlagers übernommen und von dort aus an ein drittes Transportsystem, welches ein Schienenrollwagensystem ist, übergeben. Entlang der Transportwege können Auspack- und Klebevorbereitungs-Stationen angeordnet sein. An diesen müssen die Materialrollen erneut übergeben werden.

Die Übergabe zwischen den unterschiedlichen Fördersystemen erfolgt meist mit Krananlagen oder manuell mit verschiedenen Hilfsmitteln, wie z. B. Hubwagen. Durch das häufige Umladen mit verschiedenartigen Mitteln ist die Gefahr hoch, die Materialrolle bzw. zumindest die oberen Papierschichten zu zerstören.

Die DD 268 223 A1 beschreibt eine Schiebebühne, auf der ein Transportwagen höhenverstellbar angeordnet ist.

Die DE 295 06 704 U1 offenbart eine Verfahrstation mit einem Scherenhubtisch zum zeitgleichen horizontalen und vertikalen Umsetzen von Transportgut.

Die JP 57-189919 A offenbart eine Vorrichtung zum Transport einer Last mit zwei verschiedenartigen Fördermitteln. Zwischen den beiden Fördermitteln ist eine höhenveränderliche Umsetzstation angeordnet. Die JP 57-189919 A offenbart die Merkmale des Oberbegriffs des Anspruchs 1.

Durch die US 2003/0185656 A1 ist eine Vorrichtung zum Transportieren von Gütern in ein Hochregallager mittels Teleskopgabeln bekannt.

Die US 6 464 064 B1 und die US 2003/133781 A1 zeigen Vorrichtungen zum Umsetzen von Gütern zwischen zwei verschiedenartigen Transportmitteln.

Der Erfindung liegt daher die Aufgabe zugrunde, eine Vorrichtung zum Transport von mindestens einer Materialrolle zu schaffen.

Die Aufgabe wird erfindungsgemäß durch die Merkmale des Anspruchs 1 gelöst.

Die mit der Erfindung erzielbaren Vorteile bestehen insbesondere darin, dass die Übergabe einer Materialrolle zwischen zwei verschiedenartigen Fördermitteln automatisiert erfolgen kann und eine aufwendige Krananlage für solche Zwecke entbehrlich wird.

Eine Umsetzstation kann zwischen Fördermitteln unterschiedlicher Art eingesetzt werden, wobei sich der Einsatz von teuren und manuell zu bedienenden Hebezeugen erübrigt. Als Fördermittel unterschiedlicher Art seien hier beispielsweise ein Plattenband und ein Schienen-Rollenwagen-System genannt. Die Umsetzstation kann aber auch für andere Fördersysteme konfiguriert werden. Die Umsetzstation kann sowohl zur einfachen Übergabe einer Materialrolle an ein anderes Fördermittel, aber auch als Verteiler- oder Sammelelement zwischen Fördersträngen mit verschiedenartigen Fördermitteln im innerbetrieblichen Materialfluss eingesetzt werden. Dabei ist es auch möglich, dass die Umsetzstation die Koppelstelle zwischen mehr als zwei verschiedenartigen Fördermitteln bildet.

Die Umsetzstation umfasst einen Übergabeförderer, der vorzugsweise auf einer Hubstation montiert ist. Die Hubstation ist zwischen mindestens zwei Höhenpositionen verstellbar, so dass, wenn die Hubstation eine erste Höhenebene einnimmt, der Übergabeförderer höhenmäßig mit mindestens einem ersten, abgebenden Fördermittel ausgerichtet ist, von welchem in dieser Ausrichtung die umzusetzende Materialrolle auf den Übergabeförderer übertragen wird. Die Hubstation kann weiterhin mindestens eine zweite Höhenebene anfahren, so dass eine Entkopplung der Materialrolle vom ersten Fördermittel erfolgt und nachfolgend eine Übergabe an das zweite Fördermittel möglich wird. Das zweite, abnehmende Fördermittel, auf welches die Materialrolle weitergegeben wird, kann prinzipiell auf der gleichen Höhenebene angeordnet sein.

Bei abgewandelten Ausführungsformen verlaufen die Fördermittel jedoch in unterschiedlichen Ebenen. In einem solchen Fall muss die Hubstation noch eine weitere, dritte Höhenebene anfahren können, um die Materialrolle an das zweite Fördermittel zu übergeben.

Der Übergabeförderer ist mit beiden Fördermitteln in Eingriff bringbar, d. h. kompatibel zu beiden Systemen. Darauf wird bei der Beschreibung der Ausführungsformen noch genauer eingegangen. Für den Fall, dass sich die Fördermittel nicht in der gleichen Höhenebene befinden, muss der Übergabeförderer in der ersten Höhenebene mit dem ersten Fördermittel ausgerichtet sein, in der zweiten Höhenebene von beiden Fördermitteln entkoppelt sein und in einer weiteren Höhenebene mit dem zweiten Fördermittel korrespondieren.

In den weiteren Ausführungen wird wegen besserer Übersichtlichkeit von der Konstellation ausgegangen, dass das erste und das zweite Fördermittel auf der gleichen Höhenebene verlaufen.

Das erste und das zweite Fördermittel sind vorzugsweise hintereinander mit gleicher Förderrichtung und in gleicher Höhe angeordnet. An der Stelle, an der die Übergabe der Materialrolle erfolgen soll, ist in Förderrichtung zwischen den Fördermitteln die Hubstation angeordnet, auf welcher sich der Übergabeförderer befindet, welcher in zwei bevorzugten beispielhaften Ausführungsformen später näher erläutert wird.

Zum Zwecke der Konfigurierung einer Verteiler- oder Sammelstation können auch mehrere, beispielsweise parallel verlaufende, Stränge des ersten und/oder des zweiten Fördermittels verwendet werden, zwischen denen die Hubstation mit dem Übergabeförderer angeordnet ist, wobei die Hubstation dann auch quer zur Förderrichtung verfahrbar ist, um alle Stränge bedienen zu können.

Die folgende Beschreibung der Ausführungsformen bezieht sich auf eine einfache Umsetzstation, bei der die Materialrolle lediglich vom ersten auf das zweite Fördermittel übergeben wird, wobei jedes Fördermittel aus nur einem Förderstrang besteht.

Eine bevorzugte Ausführungsform betrifft insbesondere die Übergabe einer Materialrolle von einem Plattenbandförderer auf einen Schienen-Rollwagen-Förderer. Der Fachmann wird jedoch erkennen, dass bei einer entsprechenden Ausgestaltung des Übergabeförderers die Übergabe auch von und zu anderen Fördermittel erfolgen kann. Ebenso können das erste und das zweite Fördermittel in der Reihenfolge vertauscht werden oder die Förderrichtung umgekehrt sein, ohne den Erfindungsgedanken zu verlassen.

In der ersten Höhenposition der Hubstation gelangt der Übergabeförderer in Eingriff mit der Materialrolle. Bei einer ersten Ausführungsform geschieht dies mit einem auf dem Übergabeförderer montierten Förderabschnitt, der dem ersten Fördermittel entspricht und auf welchem die Materialrolle einfach weiterläuft. Demgegenüber werden bei einer zweiten Ausführungsform vom Übergabeförderer Teleskoptragarme ausgefahren, welche in Eingriff mit der Materialrolle gelangen.

Im nächsten Schritt wird die Materialrolle vom ersten Fördermittel entkoppelt. Das geschieht durch Anheben oder Absenken des Übergabeförderers mittels Hubstation unter oder über die Fördermittelebene. Haltemittel auf dem Übergabeförderer halten die Materialrolle dabei in einer entkoppelten Position. Das sind beispielsweise Tragholme oder die erwähnten Teleskoptragarme.

Nun wird in der entkoppelten Position der Übergabeförderer für den Eingriff mit dem zweiten Fördermittel vorbereitet. Dazu kann das zweite Fördermittel auf dem Übergabeförderer fest moniert sein, welches durch eine Querverschiebung in axiale Ausrichtung mit dem Strang des zweiten Fördermittels gebracht wird. Bei der anderen Ausführungsform erfolgt dieser Schritt durch Verschieben der die Materialrolle tragenden Teleskoparme über den Strang des zweiten Fördermittels.

Erfolgt daraufhin ein Anheben bzw. Absenken des Übergabeförderers, wird die Materialrolle an den Strang des zweiten Fördermittels übergeben.

Dieser Vorgang kann vollautomatisiert erfolgen. Der Fachmann kennt hierfür unterschiedliche Lösungen für die Steuerung, die hier nicht näher erläutert werden müssen.

Ausführungsbeispiele der Erfindung sind in den Zeichnungen dargestellt und werden im Folgenden näher beschrieben.

Es zeigen:
- Fig. 1: mehrere Ansichten a) bis e) eines ersten Ausführungsbeispiels einer Umsetzstation für Materialrollen in unterschiedlichen Prozessschritten;
- Fig. 2: den Ablauf a) bis e) der Übergabe der Materialrolle gemäß des ersten Ausführungsbeispiels der Umsetzstation;
- Fig. 3: mehrere Ansichten a) bis c) eines zweiten Ausführungsbeispiels der Umsetzstation in unterschiedlichen Prozessschritten;
- Fig. 4: den Ablauf a) bis d) der Übergabe der Materialrolle gemäß des zweiten Ausführungsbeispiels der Umsetzstation.

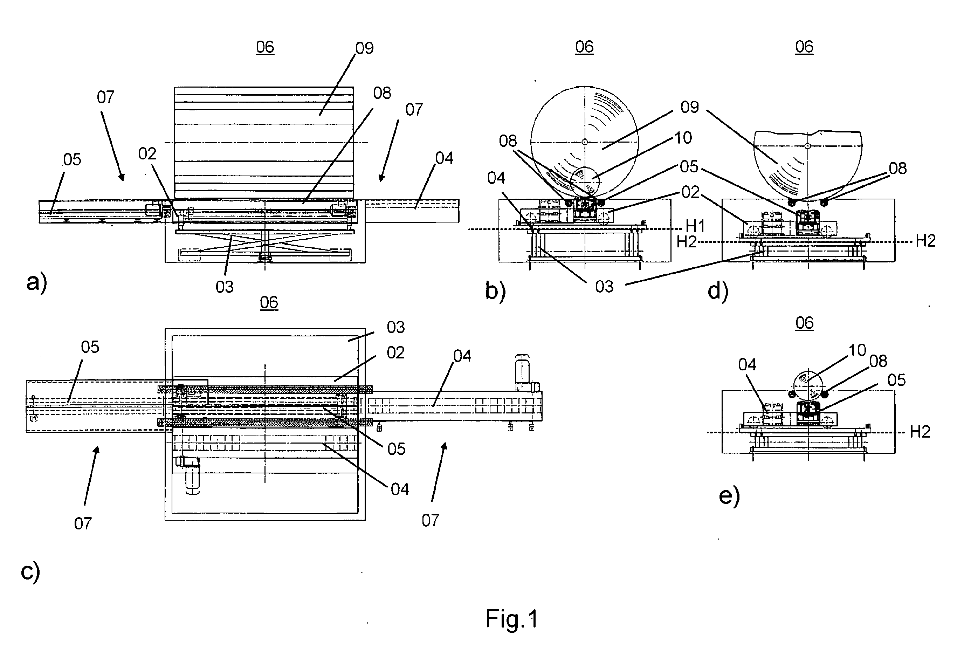

Fig. 1 zeigt mehrere Ansichten a) bis e) eines ersten Ausführungsbeispiels einer Umsetzstation 06. Die Umsetzstation 06 besitzt einen Übergabeförderer 02, der in diesem Fall als ein Querverfahrwagen 02 ausgebildet ist. Der Querverfahrwagen 02 ist auf einer Hubstation 03 montiert. Auf diesem Querverfahrwagen 02 sind ein Transportband 04, z. B. ein Plattenband 04, als erstes Fördermittel 04 und eine Schiene 05 als zweites Fördermittel 05 fest installiert, und zwar nebeneinander quer zur Förderrichtung. Die Umsetzstation 06 befindet sich zwischen zwei Transportsträngen 07, welche einerseits das erste Fördermittel 04 (Plattenband 04) und andererseits das zweite Fördermittel 05 (Schiene 05) umfassen. Zu den ersten und zweiten Fördermitteln 04; 05 kompatible Abschnitte befinden sich wie erwähnt auch auf dem Querverfahrwagen 02.

Statt den Fördermitteln 04; 05 können auch andere geeignete Aufnahmemittel, z. B. automatische Fahrzeuge (AGV = Automatic Guided Vehicle) geeignet sein.

Weiterhin sind zwei parallele Tragholme 08 fest mit der Umsetzstation 06 verbunden, und zwar in Förderrichtung verlaufend, parallel zu den auf dem Querverfahrwagen 02 verlaufenden Abschnitten der Fördermittel 04; 05 (Plattenband 04, Schiene 05). Die Tragholme 08 dienen zum Halten einer Materialrolle 09 bzw. 10 im entkoppelten Zustand (siehe unten).

In den Abbildungen a) und b) der Fig. 1 befindet sich die Hubstation 03 in einer ersten Höhenposition H1, in welcher die Tragholme 08 keinen Kontakt zur Materialrolle 09 bzw. 10 haben, die vielmehr auf einem der beiden Fördermittel 04; 05 aufliegt. In den Abbildungen d) und e) der Fig. 1 befindet sich die Hubstation 03 und damit der Querverfahrwagen 02 in einer zweiten, entkoppelten Höhenposition H2. Daraus ist erkennbar, dass die Tragholme 08 in einem solchen Abstand voneinander montiert sein müssen, dass sowohl Materialrollen 09 mit größerem Durchmesser, als auch Materialrollen 10 mit kleinerem Durchmesser in der Höhenposition H2 der Hubstation 03 sicher auf den Tragholmen 08 liegen bleiben und trotzdem von den Fördermitteln 04; 05 entkoppelt sind.

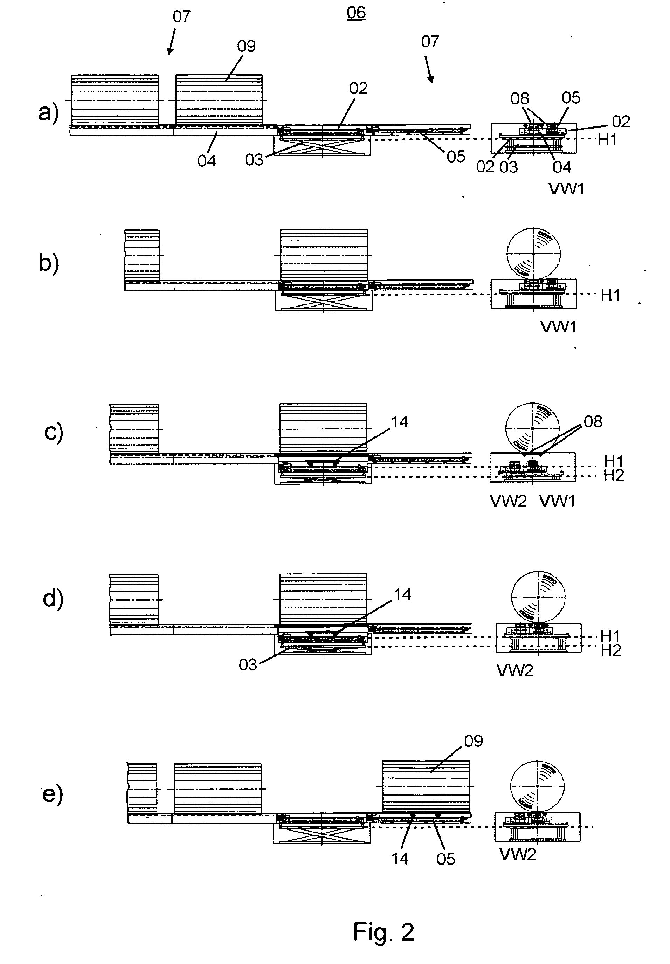

Fig. 2 veranschaulicht den Ablauf der Übergabe der Materialrolle 09 in dem zuvor beschriebenen Ausführungsbeispiel der Umsetzstation 06. Die Abbildungen a) bis e) zeigen die Umsetzstation 06 jeweils in einer Seitenansicht und in einer Ansicht von vorn. In dem dargestellten Beispiel erfolgt die Übergabe der Materialrolle 09 vom Plattenband 04 als erstes Fördermittel 04 auf das Schienen-Rollenwagen-System als zweites Fördermittel 05.

Abbildung a) der Fig. 2 zeigt den Zustand vor der Übergabe der Materialrolle 09, die sich als vorderste Materialrolle auf dem Plattenband 04 befindet. Der Querverfahrwagen 02 steht auf Querverfahrwagenposition VW1, so dass der auf dem Querverfahrwagen 02 montierte Abschnitt des Plattenbands 04 in Eingriff mit dem Plattenband 04 der ankommenden Seite des Transportstrangs 07 steht, wie es in der Seitenansicht zu erkennen ist. Die Hubstation 03 steht in der ersten Höhenposition H1. Die ankommende Materialrolle 09 wird also auf dem Plattenband 04 weiterbefördert, bis sie vollständig auf der Umsetzstation 06 liegt. Mittels Sensoren und Detektoren kann dieser Vorgang überwacht und gesteuert werden.

In Abbildung b) der Fig. 2 befindet sich die Materialrolle 09 bereits auf der Umsetzstation 06. Wenn die Materialrolle 09 die korrekte Position auf der Umsetzstation 06 erreicht hat, stoppt das Plattenband 04, die Materialrolle 09 kommt zum Stillstand. Eine Positionsüberwachung kann mit bekannten Sensoreinrichtungen erfolgen.

Die Sensoreinrichtung kann ebenfalls die an der Materialrollen 09; 10 angebrachten Identifizierungselemente abtasten. Die Identifizierungselemente sind vorteilhafterweise als Barcode, Matrixcode oder RFID (Radio Frequenzy Identification Tag) ausgebildet.

Nun erfolgt eine Entkopplung der Materialrolle 09 vom Plattenband 04 des Transportstrangs 07, indem die Hubstation 03 den Querverfahrwagen 02 in die zweite Höhenposition H2 absenkt, wie dies in Abbildung c) dargestellt ist. In Abbildung c) ist auch zu erkennen, dass die Materialrolle 09 auf den fest montierten Tragholmen 08 liegen bleibt, wenn sich der Querverfahrwagen 02 absenkt. Der Querverfahrwagen 02 wird anschließend in die Position VW2 quer zur Förderrichtung bewegt, so dass sich der auf dem Querverfahrwagen 02 montierte Abschnitt der Schiene 05 in axialer Ausrichtung mit der Schiene 05 (zweites Fördermittel 05) des abgehenden Transportstrangs 07 befindet, an welchen die Materialrolle 09 übergeben werden soll.

Bei erneutem Anheben des als Übergabeförderer 02 arbeitenden Querverfahrwagens 02 in die Position H1 erfolgt eine Kopplung der Schiene 05 des Querverfahrwagens 02 mit der Schiene 05 des Transportstrangs 07, wie es in Abbildung d) gezeigt ist. Um die Materialrolle 09 auf dem Schienensystem transportieren zu können, wird auf der Schiene 05 des Querverfahrwagens 02 vor dem Verfahren des Querverfahrwagens 02 ein Rollenwagen 14 bereitgestellt. Dies kann manuell oder automatisch in bekannter Weise erfolgen. Jeweils vor der Übergabe einer Materialrolle 09 an das Schienensystem wird ein neuer Rollenwagen 14 auf dem Übergabeförderer 02 bereitgestellt.

Nachdem die Hubstation 03 wieder in die erste Höhenposition H1 angehoben wurde (Abbildung e), bleibt die Materialrolle 09 auf dem Rollenwagen 14 liegen. Nun wird die Materialrolle 09 mit dem Rollenwagen 14 vom Querverfahrwagen 02 auf die Schiene 05 des Transportstrangs 07 gefahren. Die nächste Materialrolle kann unterdessen auf dem Plattenband 04 des Transportstrangs 07 an die Position zur Übergabe zur Umsetzstation 06 herangefahren werden.

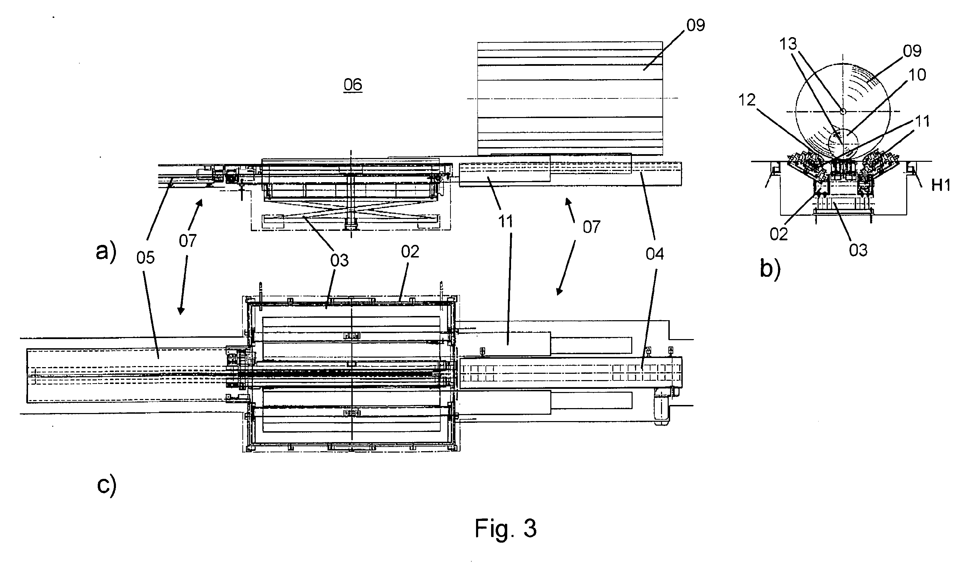

Ein zweites Ausführungsbeispiel der Umsetzstation 06 ist in Fig. 3 in drei Ansichten a) bis c) dargestellt. Wie bereits oben erläutert wurde, befindet sich die Umsetzstation 06 zwischen den Transportsträngen 07, welche jeweils ein anderes Fördermittel (z. B. Schiene 05, Plattenband 04) umfassen. Auf der Hubstation 03 ist wiederum der Übergabeförderer 11 gelagert, welcher bei diesem Ausführungsbeispiel durch zwei in beide Längsrichtungen der Förderrichtung ausfahrbare Teleskopschienen 11 gebildet ist, die ihrerseits in Form von Teleskoptragarmen 11 ausgebildet sind.

In Fig. 3 ist die Umsetzstation 06 in der ersten Höhenposition H1 der Hubstation 03 dargestellt. Die Teleskopschienen 11 sind in Richtung des ersten Fördermittels 04 - Plattenband 04 - ausgefahren. In Abbildung b) ist zu erkennen, dass die Teleskopschienen 11 quer zur Förderrichtung eine solche Neigung gegenüber der Waagerechten haben, dass an den Teleskopschienen 11 angebrachte Haltelemente 12 tangential an der Materialrolle 09 angreifen. Bei der Umsetzung einer kleineren Materialrolle 10 müssen die Teleskopschienen 11 weiter in Richtung der Rollenlängsachse 13 verschwenkt werden, um einen sicheren Halt auch für kleinere Materialrolle zu gewährleisten.

Bei einer Anhebung des Übergabeförderers 11 mittels Hubstation 03 in die Höhenposition H2 heben die Teleskopschienen 11 die Materialrolle 09 an.

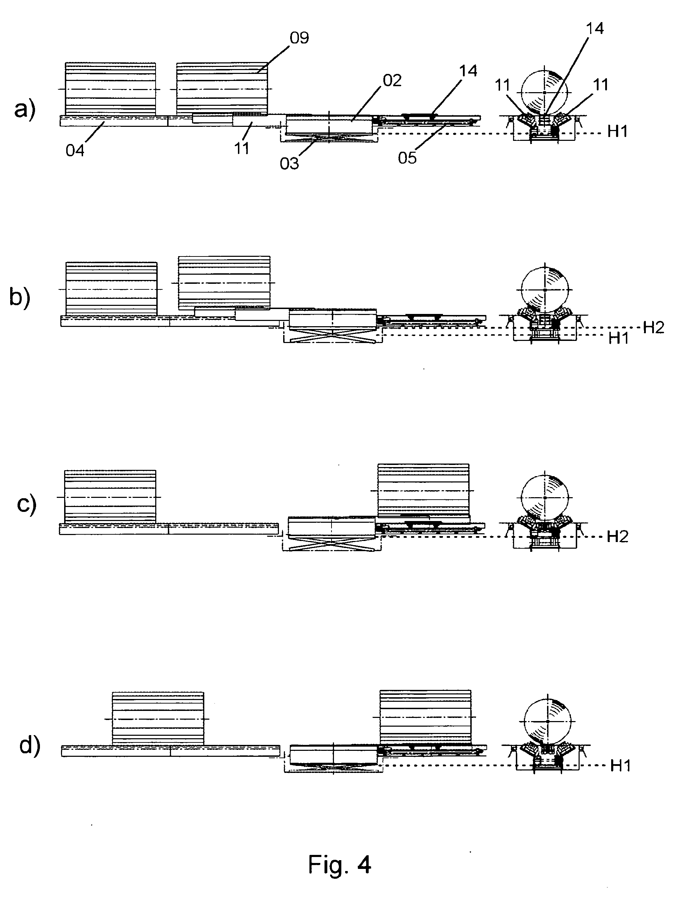

In Fig. 4 ist der Ablauf einer Übergabe der Materialrolle 09 mittels des in Fig. 3 gezeigten Ausführungsbeispiels der Umsetzstation 06 in aufeinander folgenden Prozessstufen dargestellt. Wie in Abbildung a) ersichtlich ist, befindet sich die Hubstation 03 in der Ausgangsstellung in der ersten Höhenposition H1. Die umzusetzende Materialrolle 09 wird an der Übergabeposition auf dem Plattenband 04 (erstes Fördermittel 04) gestoppt. Die den Übergabeförderer 11 bildenden Teleskopschienen 11 werden zunächst in Richtung Plattenband 04, also in die Übergabeposition ausgefahren. Die Teleskopschienen 11 unterlaufen die Materialrolle 09 zumindest mehr als die Hälfte der Längsachse der Materialrolle 09, vorzugsweise über die gesamte Länge, um eine sichere Auflage der Materialrolle 09 auf den Teleskopschienen 11 zu gewährleisten. Auf der Schiene 05 (zweites Fördermittel 05) steht bereits ein Rollenwagen 14 für die umzusetzende Materialrolle 09 bereit.

Nun wird die Hubstation 03 mit den ausgefahrenen Teleskopschienen 11 in die Höhenposition H2 angehoben, die Halteelemente 12 gelangen in Kontakt mit der Materialrolle 09, welche dadurch angehoben wird - Abbildung b). Die Materialrolle 09 ist nun vom ersten Fördermittel 04, also dem Plattenband 04 entkoppelt.

Die Teleskopschienen 11 werden im nächsten Schritt wieder eingefahren, so dass die Materialrolle 09 sich kurzzeitig oberhalb der Hubstation 03 befindet. Nun werden die Teleskopschienen 11 in Richtung Transportstrang Schiene 05 ausgefahren, so dass die Materialrolle 09 oberhalb der Schienen 05 von den Teleskopschienen 11 gehalten wird - Abbildung c).

Das Teleskopieren kann auch nur in einer Richtung (z. B. in Richtung Plattenband) erfolgen. Das Einfahren des Rollwagens kann auch mit einer fest installierten Förderschiene zwischen die Teleskoptragarme auf die Hubstation erfolgen.

Ein Absenken der Hubstation 03 zurück in die Höhenposition H1 erfolgt anschließend - Abbildung d). Die Materialrolle 09 wird dadurch auf dem Rollenwagen 14 abgesetzt und kann auf der Schiene 05 weiter transportiert werden.

### Bezugszeichenliste

- 01: -
- 02: Übergabeförderer; Querverfahrwagen
- 03: Hubstation
- 04: Fördermittel, erstes; Transportband; Plattenband
- 05: Fördermittel, zweites; Schiene
- 06: Umsetzstation
- 07: Transportstrang
- 08: Tragholm
- 09: Materialrolle, Durchmesser, groß
- 10: Materialrolle, Druckmesser, klein
- 11: Teleskopschiene; Teleskoptragarm
- 12: Halteelement
- 13: Rollenlängsachse
- 14: Rollenwagen

- H1: Höhenposition, erste
- H2: Höhenposition, zweite

- VW1: Querverfahrwagenposition (04)
- VW2: Querverfahrwagenposition (05)

## Patentansprüche

1. Vorrichtung zum Transport von mindestens einer Materialrolle (09; 10), wobei ein erstes Fördermittel (04) und ein zweites Fördermittel (05) vorgesehen sind, wobei die beiden Fördermittel (04; 05) verschiedenartig sind, wobei zwischen den beiden Fördermitteln (04; 05) in Förderrichtung der Materialrolle (09; 10) eine Umsetzstation (06) angeordnet ist, wobei die Umsetzstation (06) eine Hubstation (03) aufweist, wobei die Umsetzstation (06) einen Übergabeförderer (02; 11) aufweist, **dadurch gekennzeichnet, dass** der Übergabeförderer (02) Abschnitte der beiden verschiedenartigen Fördermittel (04; 05) aufweist.

2. Vorrichtung nach Anspruch 1, **dadurch gekennzeichnet, dass** auf der Hubstation (03) ein Übergabeförderer (02; 11) angeordnet ist.

3. Vorrichtung nach Anspruch 1, **dadurch gekennzeichnet, dass** der Übergabeförderer (02; 11) wahlweise mit dem ersten Fördermittel (04) oder dem zweiten Fördermittel (05) koppelbar oder gekoppelt ist.

4. Vorrichtung nach Anspruch 1, **dadurch gekennzeichnet, dass** die Hubstation (03) in Förderrichtung zwischen den beiden Fördermitteln (04; 05) angeordnet ist, wobei die Hubstation (03) mindestens zwei Höhenpositionen (H1; H2) einnehmen kann, wovon die erste Höhenposition (H1) mit der Ebene korrespondiert, in der sich mindestens eines der beiden Fördermittel (04; 05) befindet, dass der Übergabeförderer (02; 11) auf der Hubstation (03) gelagert ist, und welcher mit den beiden Fördermitteln (04; 05) kompatibel ist, wobei der Übergabeförderer (02; 11) in der ersten Höhenposition (H1) mit dem ersten Fördermittel (04) oder mit dem ersten und dem zweiten Fördermittel (04; 05) wahlweise gekoppelt ist, um die Materialrolle (09; 10) aufzunehmen oder abzugeben, wobei in der zweiten Höhenposition (H2) die Materialrolle (09; 10) von beiden Fördermitteln (04; 05) entkoppelt ist, und wobei die Übergabe der Materialrolle (09; 10) von dem ersten Fördermittel (04) zum zweiten Fördermittel (05) in dieser zweiten Höhenposition (H2) erfolgt.

5. Vorrichtung nach Anspruch 1, **dadurch gekennzeichnet, dass** der Übergabeförderer (02) Abschnitte beider Fördermittel (04; 05) umfasst, welche fest auf der Hubstation (03) nebeneinander montiert sind, wobei das Umsetzen zwischen den Fördermitteln (04; 05) durch einen Querverfahrwagen (02) des Übergabeförderers (02) erfolgt, während sich die Hubstation (03) in der zweiten Höhenposition (H2) befindet.

6. Vorrichtung nach Anspruch 4, **dadurch gekennzeichnet, dass** zwei Tragholme (08) vorgesehen sind, auf denen die sich oberhalb der Hubstation (03) befindende Materialrolle (09; 10) aufliegt, wenn die Hubstation (03) in die zweite Höhenposition (H2) verfahren ist.

7. Vorrichtung nach Anspruch 1 oder 4, **dadurch gekennzeichnet, dass** der Übergabeförderer eine Teleskopeinrichtung aus mindestens zwei Teleskopschienen (11) umfasst.

8. Vorrichtung nach Anspruch 7, **dadurch gekennzeichnet, dass** die Teleskopiereinrichtung in zwei Richtungen teleskopierbar ist, so dass die ausgefahrenen Teleskopschienen (11) jeweils in der ersten Richtung über das erste Fördermittel (04) und in der zweiten Richtung über das zweite Fördermittel (05) hinausragen, wobei an den Teleskopschienen (11) Halteelemente (12) zur Aufnahme einer Materialrolle (09; 10) befestigt sind.

9. Vorrichtung nach Anspruch 7, **dadurch gekennzeichnet, dass** die Teleskopschienen (11) um eine parallel zur Rollenlängsachse (13) der Materialrolle (09) liegende Schwenkachse verschwenkbar sind, um ihre Endlage an verschiedene Rollendurchmesser anzupassen.

10. Vorrichtung nach Anspruch 1 oder 4, **dadurch gekennzeichnet, dass** der Übergabeförderer (11) quer zur Förderrichtung der Materialrolle (09; 10) verfahrbar ist.

11. Vorrichtung nach Anspruch 2 oder 4, **dadurch gekennzeichnet, dass** die Hubstation (03) mit dem Übergabeförderer (11) um einen Versatz quer zur Förderrichtung der Materialrolle (09; 10) verfahrbar ist.

12. Vorrichtung nach Anspruch 4, **dadurch gekennzeichnet, dass** die zweite Höhenposition (H2) ober- oder unterhalb der Ebenen der Fördermittel (04; 05) liegt.

13. Vorrichtung nach Anspruch 1, **dadurch gekennzeichnet, dass** das erste Fördermittel (04) ein Transportband (04) und das zweite Fördermittel (05) mindestens eine Schiene (05) aufweist.

14. Vorrichtung nach Anspruch 13, **dadurch gekennzeichnet, dass** das Transportband (04) als Plattenband (04) ausgebildet ist.

15. Vorrichtung nach Anspruch 13, **dadurch gekennzeichnet, dass** das zweite Fördermittel (05) einen schienengeführten Transportwagen (14) aufweist.

16. Vorrichtung nach Anspruch 1, **dadurch gekennzeichnet, dass** mindestens eine Sensoreinrichtung zum Detektieren der Position der umzusetzenden Materialrolle (09; 10) vorhanden ist.

17. Vorrichtung nach Anspruch 16, **dadurch gekennzeichnet, dass** die Sensoreinrichtung auch mindestens ein an der Materialrolle (09; 10) angebrachtes Identifizierungselement abtastet.

18. Vorrichtung nach Anspruch 17, **dadurch gekennzeichnet, dass** das Identifizierungselement als Barcode, Matrixcode oder RFID (Radio Frequenzy Identification Tag) ausgebildet ist.

## Claims

1. An apparatus for conveying at least one roll of material (09; 10), wherein a first conveying means (04) and a second conveying means (05) are provided, wherein the two conveying means (04; 05) are different, wherein a change-over station (06) is arranged between the two conveying means (04; 05) in the conveying direction of the roll of material (09; 10), wherein the change-over station (06) comprises a lifting station (03), wherein the change-over station (06) comprises a transfer conveyor (02; 11), **characterized in that** the transfer conveyor (02) comprises portions of the two different conveying means (04; 05).

2. An apparatus according to Claim 1, **characterized in that** a transfer conveyor (02; 11) is arranged on the lifting station (03).

3. An apparatus according to Claim 1, **characterized in that** the transfer conveyor (02; 11) is capable of being coupled or is coupled in a selective manner to the first conveying means (04) or to the second conveying means (05).

4. An apparatus according to Claim 1, **characterized in that** the lifting station (03) is arranged in the conveying direction between the two conveying means (04; 05), wherein the lifting station (03) can occupy at least two vertical positions (H1; H2), the first vertical position (H1) of which corresponds to the plane in which at least one of the two conveying means (04; 05) is situated, the transfer conveyor (02; 11) is mounted on the lifting station (03), and is compatible with the two conveying means (04; 05), wherein the transfer conveyor (02; 11) is coupled in the first vertical position (H1) to the first conveying means (04) or to the first and the second conveying means (04; 05) in a selective manner in order to receive or deliver the roll of material (09; 10), wherein the roll of material (09; 10) is uncoupled from the two conveying means (04; 05) in the second vertical position (H2), and wherein the transfer of the roll of material (09; 10) from the first conveying means (04) to the second conveying means (05) takes place in the said second vertical position (H2).

5. An apparatus according to Claim 1, **characterized in that** the transfer conveyor (02) comprises portions of the two conveying means (04; 05) which are mounted adjacent to each other on the lifting station (03) in a fixed manner, wherein the change-over between the conveying means (04; 05) is carried out by a transversely moving carriage (02) of the transfer conveyor (02), whilst the lifting station (03) is situated in the second vertical position (H2).

6. An apparatus according to Claim 4, **characterized in that** two transverse crossheads (08) are provided, on which the roll of material (09; 10) present above the lifting station (03) rests when the lifting station (03) has moved into the second vertical position (H2).

7. An apparatus according to Claim 1 or 4, **characterized in that** the transfer conveyor comprises a telescopic device consisting of at least two telescopic rails (11).

8. An apparatus according to Claim 7, **characterized in that** the telescopic device is capable of being telescoped in two directions, so that the extended telescopic rails (11) project in the first direction beyond the first conveying means (04) and in the second direction beyond the second conveying means (05) in each case, wherein holding means (12) for receiving a roll of material (09; 10) are fastened to the telescopic rails (11).

9. An apparatus according to Claim 7, **characterized in that** the telescopic rails (11) are pivotable about a pivot axis situated parallel to the longitudinal axis (13) of the roll of material (09) in order to adapt their end position to different diameters of the roll.

10. An apparatus according to Claim 1 or 4, **characterized in that** the transfer conveyor (11) is capable of being moved transversely to the conveying direction of the roll of material (09; 10).

11. An apparatus according to Claim 2 or 4, **characterized in that** the lifting station (03) is capable of being moved with the transfer conveyor (11) by an offset transversely to the conveying direction of the roll of material (09; 10).

12. An apparatus according to Claim 4, **characterized in that** the second vertical position (H2) is situated above or below the planes of the conveying means (04; 05).

13. An apparatus according to Claim 1, **characterized in that** the first conveying means (04) has a conveyor belt (04) and the second conveying means (05) has at least one rail (05).

14. An apparatus according to Claim 13, **characterized in that** the conveyor belt (04) is constructed in the form of a plate belt (04).

15. An apparatus according to Claim 13, **characterized in that** the second conveying means (05) has a rail-guided conveying carriage (14).

16. An apparatus according to Claim 1, **characterized in that** at least one sensor device for detecting the position of the roll of material (09; 10) to be changed over is provided.

17. An apparatus according to Claim 16, **characterized in that** the sensor device also senses at least one identification element attached to the roll of material (09; 10).

18. An apparatus according to Claim 17, **characterized in that** the identification element is constructed in the form of a bar code, matrix code or RFID (radio frequency identification tag).

## Revendications

1. Dispositif de transport d'au moins une bobine de matériau (09 ; 10), un premier moyen de transport (04) et un deuxième moyen de transport (05) étant prévus, les deux moyens de transport (04 ; 05) étant de type différent, une station de déplacement (06) étant disposée entre les deux moyens de transport (04 ; 05), dans la direction de transport de la bobine de matériau (09 ; 10), la station de déplacement (06) présentant une station de levage (03), la station de déplacement (06) présentant un transporteur de transfert (02 ; 11), **caractérisé en ce que** le transporteur de transfert (02 ; 11) présente des tronçons des deux moyens de transport (04 ; 05) de type différent.

2. Dispositif selon la revendication 1, **caractérisé en ce qu'**un transporteur de transfert (02 ; 11) est disposé sur la station de levage (03).

3. Dispositif selon la revendication 1, **caractérisé en ce que** le transporteur de transfert (02 ; 11) est susceptible d'être couplé, ou est couplé, au choix, au premier moyen de transport (04) ou au deuxième moyen de transport (05).

4. Dispositif selon la revendication 1, **caractérisé en ce que** la station de levage (03) est disposée entre les deux moyens de transport (04 ; 05), dans la direction de transport, la station de levage (03) pouvant prendre au moins deux positions en hauteur (H1 ; H2), dont la première position en hauteur (H1) correspond au plan dans lequel se trouve au moins un des deux moyens de transport (04 ; 05), **en ce que** le transporteur de transfert (02 ; 11) est monté sur la station de levage (03), et il est compatible avec les deux moyens de transport (04 ; 05), le transporteur de transfert (02 ; 11), à la première position en hauteur (H1), est couplé, au choix, au premier moyen de transport (04), ou au premier et au deuxième moyen de transport (04 ; 05), de manière à supporter ou délivrer la bobine de matériau (09 ; 10), sachant que, à la deuxième position en hauteur (H2), la bobine de matériau (09 ; 10) est désaccouplée des deux moyens de transport (04 ; 05), et le transfert de la bobine de matériau (09 ; 10), du premier moyen de transport (04) au deuxième moyen de transport (05), s'effectuant à cette deuxième position en hauteur (H2).

5. Dispositif selon la revendication 1, **caractérisé en ce que** le transporteur de transfert (02) comprend des tronçons des deux moyens de transport (04 ; 05), montés les uns à côté des autres, rigidement, sur la station de levage (03), le déplacement entre les moyens de transport (04 ; 05) s'effectuant au moyen d'un chariot de déplacement transversal (02) du transporteur de transfert (02), tandis que la station de levage (03) se trouve à la deuxième position en hauteur (H2).

6. Dispositif selon la revendication 4, **caractérisé en ce que** sont prévus deux montants support (08), sur lesquels repose la bobine de matériau (09 ; 10), se trouvant au-dessus de la station de levage (03), lorsque la station de levage (03) est déplacée à la deuxième position en hauteur (H2).

7. Dispositif selon la revendication 1 ou 4, **caractérisé en ce que** le transporteur de transfert comprend un dispositif télescopique, composé d'au moins deux glissières télescopiques (11).

8. Dispositif selon la revendication 7, **caractérisé en ce que** le dispositif télescopique peut être déployé, dans deux sens, de manière que les glissières télescopiques (11) déployées sortent, d'une part, dans le premier sens, hors du premier moyen de transport (04) et, dans le deuxième sens, hors du deuxième moyen de transport (05), des éléments de maintien (12), devant assurer la réception d'une bobine de matériau (09 ; 10), étant fixés aux glissières télescopiques (11).

9. Dispositif selon la revendication 7, **caractérisé en ce que** les glissières télescopiques (11) sont susceptibles de pivoter autour d'un axe de pivotement, situé parallèlement à l'axe longitudinal de bobine (13) de la bobine de matériau (09), pour adapter sa position finale à différents diamètres de bobine.

10. Dispositif selon la revendication 1 ou 4, **caractérisé en ce que** le transporteur de transfert (11) est déplaçable transversalement à la direction de transport de la bobine de matériau (09 ; 10).

11. Dispositif selon la revendication 2 ou 4, **caractérisé en ce que** la station de levage (03), avec le transporteur de transfert (11), est déplaçable, de la valeur d'un décalage, transversalement à la direction de transport de la bobine de matériau (09 ; 10).

12. Dispositif selon la revendication 4, **caractérisé en ce que** la deuxième position en hauteur (H2) est située au-dessus ou au-dessous des plans des moyens de transport (04 ; 05).

13. Dispositif selon la revendication 1, **caractérisé en ce que** le premier moyen de transport (04) présente une bande transporteuse (04) et le deuxième moyen de transport (05) présente au moins une glissière (05).

14. Dispositif selon la revendication 13, **caractérisé en ce que** la bande transporteuse (04) est réalisée sous la forme de bande transporteuse à plateaux (04).

15. Dispositif selon la revendication 13, **caractérisé en ce que** le deuxième moyen de transport (05) présente un chariot de transport (14) guidé sur des rails.

16. Dispositif selon la revendication 1, **caractérisé en ce qu'**au moins un dispositif à capteur est prévu pour détecter la position de la bobine de matériau (09 ; 10) à déplacer.

17. Dispositif selon la revendication 16, **caractérisé en ce que** le dispositif à capteur palpe également au moins un élément d'identification monté sur la bobine de matériau (09 ; 10).

18. Dispositif selon la revendication 17, **caractérisé en ce que** l'élément d'identification est réalisé sous la forme de code à barres, code matriciel ou RFID (Radio Frequency Identification Tag).
